# FASCICULE DE BREVET EUROPEEN

(11) **EP 0 716 487 B1**
(45) Date de publication et mention de la délivrance du brevet: **09.12.1998**
(21) Numéro de dépôt: 95410124.2
(22) Date de dépôt: 30.10.1995
(51) Int. Cl.: H02B 1/20, H01R 31/08, H01R 9/26

(54) **Répartiteur pour l'alimentation électrique d'une série d'appareils**
Verteiler zur elektrischen Energieversorgung einer Reihe von Geräten
Distributor for supplying electric energy to a number of devices

(30) Priorité: 05.12.1994 FR 9414798
(43) Date de publication de la demande: 12.06.1996
(73) Titulaire: SCHNEIDER ELECTRIC SA, 92100 Boulogne Billancourt (FR)
(72) Inventeur: Bedrossian, Antoine, F-38050 Grenoble Cedex 09 (FR); Faure-Curt, Michel, F-38050 Grenoble Cedex 09 (FR); Gerbier, Philippe, F-38050 Grenoble Cedex 09 (FR)
(74) Mandataire: Hecké, Gérard

(56) Documents cités:
- EP-A- 0 112 232
- WO-A-92/03857
- DE-U- 7 603 277
- GB-A- 2 119 576
- US-A- 5 166 861

## Description

La présente invention concerne un répartiteur pour l'alimentation électrique d'une série d'appareils, notamment des disjoncteurs, ce répartiteur comportant un ensemble de barres d'alimentation, longitudinales et conductrices, pourvues chacune d'au moins une borne d'entrée et d'une série de bornes de sortie, ces dernières étant respectivement agencées pour être connectées à une borne d'entrée appropriée des appareils de ladite série, ainsi qu'un boîtier de protection.

On connait déjà des répartiteurs de ce type qui sont habituellement utilisés pour raccorder au réseau une ou plusieurs séries d'appareils électriques tels que notamment des disjoncteurs montés sur un tableau ou dans un coffret électrique. La liaison entre les barres d'alimentation et les bornes de sortie se fait au moyen de brides plates en forme de cavaliers recourbés en U. Du fait de la largeur de ces brides plates, l'encombrement du répartiteur est nécessairement important, les brides étant disposées parallèlement et un écartement minimal de sécurité entre les brides devant être respecté. En effet, si les brides sont trop rapprochées, un arc peut se déclencher entre deux brides voisines et endommager l'installation électrique. En outre, la disposition de ces brides par-dessus les barres d'alimentation ralentit la circulation de l'air dans cette zone et réduit l'évacuation de la chaleur générée par effet Joule dans l'installation et notamment par la circulation du courant électrique dans le répartiteur lui-même.

Un répartiteur de ce type et connu de l'art antérieur est par exemple décrit dans le document EP-A-0 112 232.

Enfin les répartiteurs connus ne peuvent pas être placés alternativement à droite ou à gauche d'un dispositif appelé jeu de barres qui assure généralement le raccordement entre le réseau et un tableau électrique contenant plusieurs groupes ou séries d'appareils, notamment de disjoncteurs. De plus les répartiteurs connus ne peuvent pas être montés en série, c'est-à-dire directement dans le prolongement les uns des autres, sans nécessiter de pièces de raccordement intermédiaire.

Le répartiteur selon l'invention se propose de pallier l'ensemble des inconvénients mentionnés ci-dessus. En particulier, il permet d'assurer une meilleure évacuation de la chaleur générée par effet Joule, il peut être monté à droite ou à gauche d'un jeu de barres sur un tableau ou dans un coffret ou une armoire électrique et il peut être couplé en série avec un répartiteur identique.

Dans ce but, le répartiteur tel que défini en préambule est caractérisé en ce que lesdites bornes de sortie sont raccordées auxdites barres d'alimentation par des brides disposées dans des plans parallèles formant un angle aigu avec l'axe longitudinal desdites barres, et en ce que ces barres d'alimentation comportent un jeu de bornes d'entrée à chacune de leurs extrémités et en ce que les bornes de sortie de l'ensemble des brides sont alignées parallèlement aux barres d'alimentation.

Selon une forme de réalisation préférée, les deux jeux de bornes sont complémentaires et permettent le raccordement en série de deux répartiteurs disposés dans le prolongement l'un de l'autre.

D'autres avantages de la présente invention apparaîtront dans la description d'un mode de réalisation préféré donné à titre d'exemple non limitatif et dans les dessins annexés dans lesquels :
- la figure 1 est une vue en perspective représentant un répartiteur selon l'invention,
- la figure 2 est une vue en perspective représentant un boîtier de protection pour loger le répartiteur de la figure 1, et
- la figure 3 est une vue en perspective représentant le boîtier de la figure 2 contenant le répartiteur selon l'invention et associé à trois disjoncteurs.

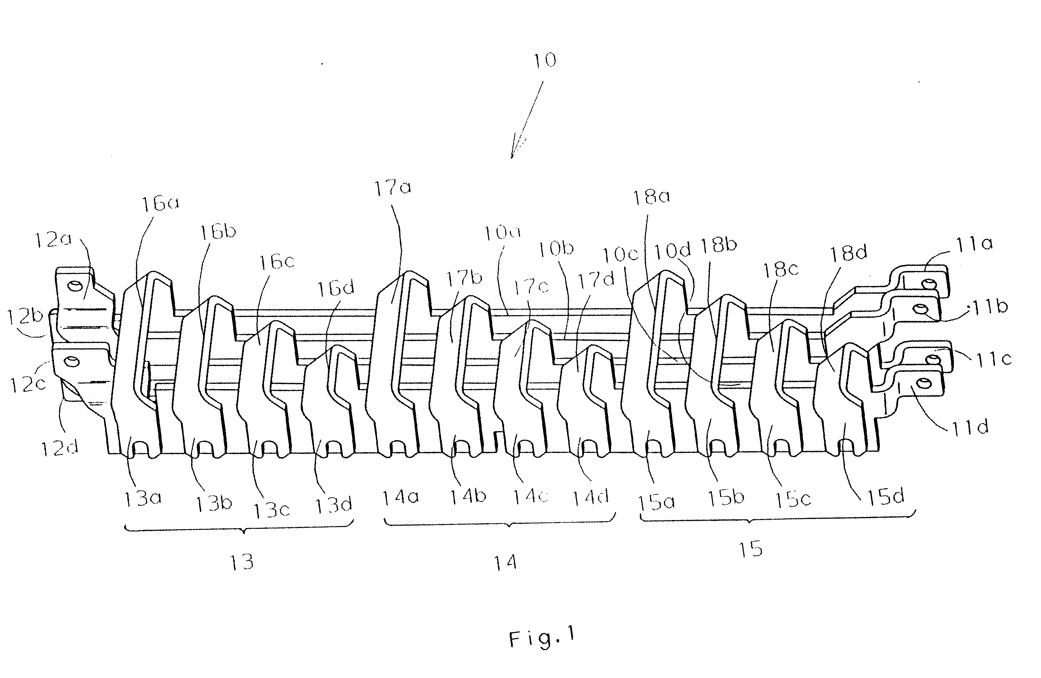

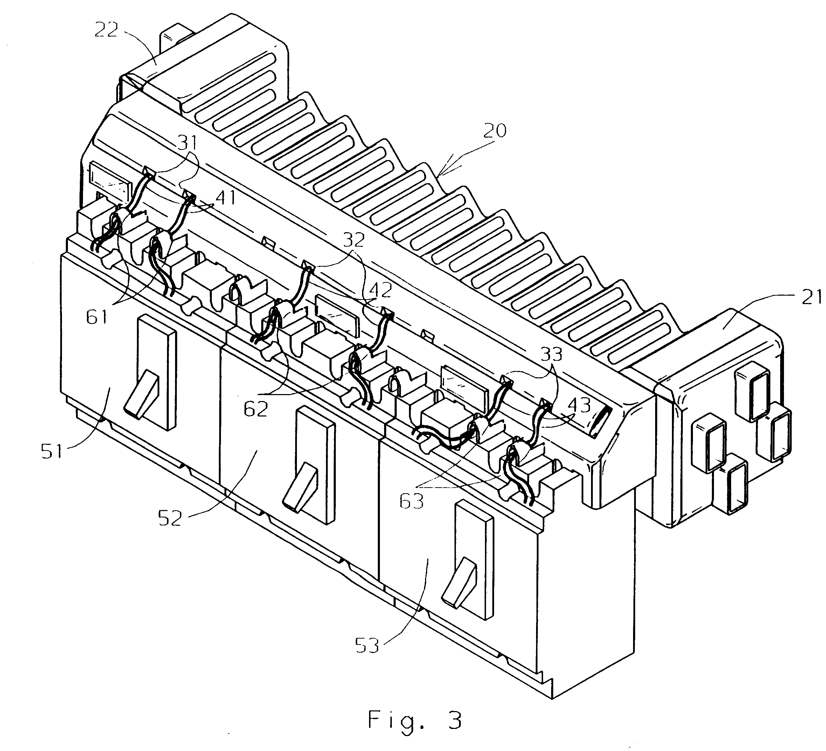

En référence aux figures et plus particulièrement à la figure 1, le répartiteur 10, qui est dans ce cas un répartiteur tétrapolaire, comporte quatre barres d'alimentation, longitudinales et conductrices 10a, 10b, 10c et 10d. Ces barres, qui ont une forme allongée et une section rectangulaire, sont disposées parallèlement de telle manière que leurs grandes faces soient parallèles et leurs petites faces dans les deux plans parallèles, perpendiculaires aux grandes faces. Elles comportent à chacune de leurs extrémités respectivement une première borne d'entrée 11a, 11b, 11c et 11d, et une deuxième borne d'entrée 12a, 12b, 12c, 12d. Par ailleurs, le répartiteur comporte, dans la réalisation représentée par cette figure, trois séries de bornes de sortie 13, 14 et 15, destinées à être raccordées aux bornes d'entrée correspondantes d'appareils électriques tels que des disjoncteurs, représentés par la figure 3. La première série 13 de bornes de sortie, comporte une première borne 13a qui est connectée à la barre d'alimentation 10a, une deuxième borne 13b qui est connectée à la barre d'alimentation 10b, une troisième borne 13c qui est connectée à la barre d'alimentation 10c et une quatrième borne 13d qui est connectée à la barre d'alimentation 10d. De façon similaire, la série 14 de bornes de sortie comporte les bornes 14a, 14b, 14c et 14d qui sont respectivement raccordées aux barres d'alimentation 10a, 10b, 10c et 10d. Enfin, la série de bornes de sortie 15 comporte des bornes 15a, 15b, 15c, 15d, qui sont respectivement connectées aux barres d'alimentation 10a, 10b, 10c et 10d. Les bornes de sortie sont toutes alignées parallèlement aux barres d'alimentation et régulièrement espacées.

Le raccordement des bornes de sortie aux barres d'alimentation correspondantes se fait respectivement au moyen de brides 16a, 16b, 16c, 16d,; 17a, 17b, 17c, 17d et 18a, 18b, 18c, 18d réalisées au moyen de lames conductrices découpées par emboutissage et pliées de manière appropriée. Les barres d'alimentation avec leurs bornes d'entrée, les brides de raccordement et les bornes de sortie sont découpées dans une même plaque plane en un matériau électriquement bon conducteur tel que le cuivre ou un alliage cuivré couramment utilisé. Les axes de ces brides sont orientés transversalement par rapport à l'axe longitudinal des barres d'alimentation, sensiblement perpendiculairement à ces dernières. En outre, elles sont toutes inclinées et disposées dans des plans parallèles entre eux et formant un angle aigu avec l'axe longitudinal des barres d'alimentation. L'inclinaison des brides est la même pour toutes, de sorte que ces brides sont toutes parallèles entre elles, ont une direction longitudinale perpendiculaire à l'axe longitudinal des barres d'alimentation et sont, dans une direction transversale par rapport à leur axe longitudinal, inclinées par rapport audit axe longitudinal des barres d'alimentation.

En d'autres termes, les plans définis par les brides sont inclinés par rapport aux plans définis par les petites faces des barres d'alimentation et forment avec ces derniers un angle aigu. Cette disposition a plusieurs avantages. D'une part l'espace entre deux brides adjacentes est optimal ce qui permet d'obtenir une ouverture maximale, de manière à favoriser la circulation de l'air et plus particulièrement l'évacuation de la chaleur générée par effet Joule au niveau du répartiteur. D'autre part, le fait d'avoir un écartement optimal pour un encombrement donné permet de minimiser le risque de génération spontanée d'un arc électrique entre deux brides voisines. Enfin, cette disposition permet de réduire l'encombrement du répartiteur par réduction de sa longueur et de sa hauteur.

Le fait de disposer de deux séries de bornes d'entrée respectivement disposées aux deux extrémités des barres d'alimentation a comme avantage de permettre l'accouplement en série de plusieurs répartiteurs du même type et la connexion à droite ou à gauche du répartiteur 10 à un jeu de barres (non représentées) généralement disposées à l'intérieur d'une armoire électrique pour amener le courant du réseau dans cette armoire. Ces éléments confèrent au répartiteur décrit un caractère universel particulièrement attrayant. Il est évident que les bornes 11a, 11b, 11c et 11d sont complémentaires des bornes correspondantes 12a, 12b, 12c et 12d, c'est-à-dire qu'elles sont décalées latéralement les unes par rapport aux autres d'une distance égale à l'épaisseur d'une barre d'alimentation. L'objectif recherché est qu'une borne d'entrée 11a d'un premier répartiteur puisse être raccordée directement à une borne d'entrée 12a d'un deuxième répartiteur disposé de façon adjacente dans le prolongement du premier, qu'une borne 11b puisse être raccordée directement à une borne d'entrée 12b; une borne 11c à une borne 12c et une borne 11d à une borne 12d.

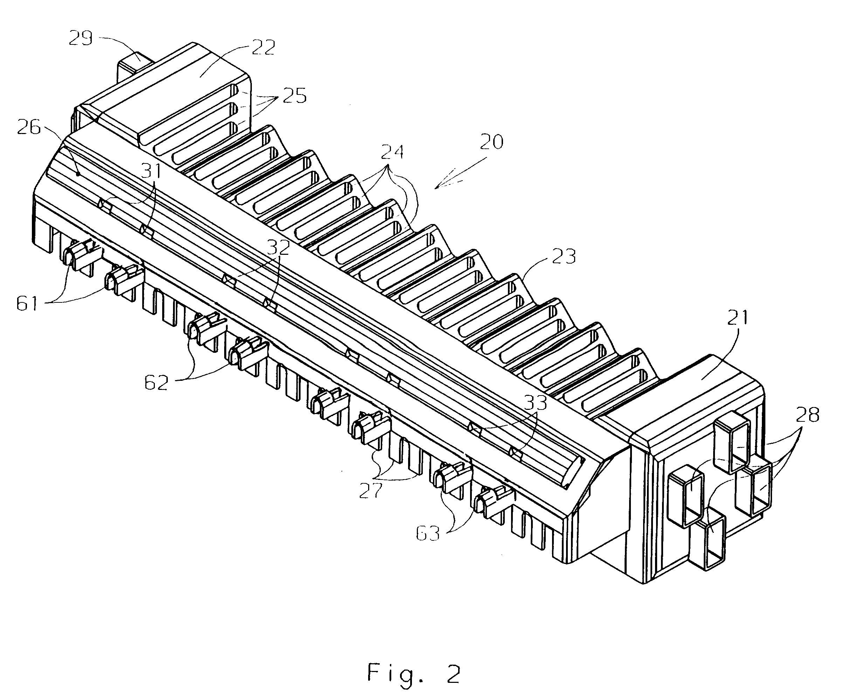

Les figures 2 et 3 représentent un boîtier de protection 20 agencé pour contenir le répartiteur 10 de la figure 1 et pour assurer la protection de l'utilisateur lorsqu'il est mis en service dans une armoire électrique. La figure 2 montre le boîtier seul, la figure 3 montre le boîtier associé à trois disjoncteurs alimentés par un répartiteur contenu dans le boîtier. Ce boîtier est bien entendu réalisé en un matériau isolant, par exemple une matière synthétique moulée. Il comporte deux boîtes d'extrémité 21 et 22 agencées pour contenir respectivement les bornes d'entrée 11a, 11b, 11c, 11d et 12a, 12b, 12c, 12d. Ces deux boîtes d'extrémité sont reliées par un capot central 23 présentant une forme ondulée ou crénelée destinée à masquer les brides qui assurent le raccordement des barres d'alimentation avec les bornes de sortie du répartiteur 10. Sur une des faces de chaque créneau, ce capot central est pourvu de deux ouïes 24 qui correspondent sensiblement à l'espace séparant deux brides adjacentes, et qui sont destinées à faciliter l'évacuation de la chaleur en favorisant la circulation de l'air vers l'extérieur du boîtier de protection. Dans ce même but, les deux boîtes d'extrémité 21 et 22 comportent également des ouvertures de ventilation 25 ménagées sur leur face arrière. Par ailleurs, les boîtes d'extrémité 21 et 22 comportent chacun des ouvertures, respectivement 28 et 29, agencées pour permettre l'accès aux deux séries de bornes d'entrée, respectivement 11a, 11b, 11c, 11d; 12a, 12b, 12c, 12d, du répartiteur 10.

Le boîtier de protection 20 est pourvu sur sa face frontale d'une goulotte de câbles 26 destinée à contenir des câbles d'alimentation d'auxiliaires des disjonteurs appelés couramment fils fins des auxiliaires.

La goulotte de câbles 26 comporte trois paires d'ouvertures 31, 32, et 33, respectivement prévues pour le passage des fils fins 41, 42, 43, destinés à alimenter des auxiliaires associés aux disjoncteurs 51, 52 et 53 alimentés par l'intermédiaire du répartiteur. A cet effet, la goulotte de câbles 26 du boîtier de protection 20 comporte des tunnels 61, 62 et 63 de guidage des fils fins permettant à la fois leur maintien en place et leur repérage. Sur sa face frontale, la goulotte de câbles 26 comporte un certain nombre d'échancrures 27 destinées à coopérer avec le profil de la partie supérieure des boîtiers des disjoncteurs qui s'encastrent partiellement dans cette face de la goulotte.

Le répartiteur décrit ci-dessus peut se présenter sous différentes variantes. Il peut par exemple être tripolaire ou tétrapolaire et être adapté, au point de vue de la construction, aux appareils qu'il alimente.

## Revendications

1. Répartiteur pour l'alimentation électrique d'une série d'appareils, notamment des disjoncteurs, ce répartiteur comportant un ensemble de barres d'alimentation (10a,b,c,d), longitudinales et conductrices, pourvues chacune d'au moins une borne d'entrée et d'une série de bornes de sortie (13,14,15), ces dernières étant respectivement agencées pour être connectées à une borne d'entrée appropriée des appareils de ladite série, ainsi qu'un boîtier de protection (20), caractérisé en ce que lesdites bornes de sortie (13a,b,c,d; 14a,b,c,d; 15a,b,c,d) sont raccordées auxdites barres d'alimentation (10a, 10b, 10c, 10d) par des brides (16a,b,c,d; 17a,b,c,d; 18a,b,c,d) disposées dans des plans parallèles formant un angle aigu avec l'axe longitudinal desdites barres, et en ce que ces barres d'alimentation comportent un jeu de bornes d'entrée (11a,b,c,d; 12a,b,c,d) à chacune de leurs extrémités et en ce que les bornes de sortie de l'ensemble des brides sont alignées parallèlement aux barres d'alimentation.

2. Répartiteur selon la revendication 1, caractérisé ce que le jeu de bornes d'entrée (11a,b,c,d) disposé à une extrémité des barres d'alimentation est complémentaire du jeu de bornes d'entrée (12a,b,c,d) disposé à l'autre extrémité des barres d'alimentation, de telle manière que deux répartiteurs (10) identiques puissent être couplés en série dans le prolongement l'un de l'autre.

3. Répartiteur selon la revendication 2, caractérisé en ce que les bornes d'entrée (11a,b,c,d) disposées à une extrémité des barres d'alimentation sont décalées latéralement par rapport aux bornes d'entrée (12a,b,c,d) disposées à l'autre extrémité de ces barres, d'une distance sensiblement égale à l'épaisseur d'une barre (10a, 10b, 10c, 10d).

4. Répartiteur selon la revendication 1, caractérisé en ce que lesdites brides (16a,b,c,d; 17a,b,c,d; 18a,b,c,d), les bornes de sortie (13a,b,c,d; 14a,b,c,d; 15a,b,c,d) et les barres d'alimentation (10a, 10b, 10c, 10d) sont découpées dans une même plaque d'un matériau électriquement bon conducteur et pliées de telle manière que les brides ont un axe longitudinal perpendiculaire à l'axe longitudinal des barres d'alimentation et un axe transversal qui forme un angle aigu avec l'axe longitudinal des barres d'alimentation.

5. Répartiteur selon la revendication 1, caractérisé en ce que ledit boîtier de protection comporte deux boîtes d'extrémité (21, 22) et un capot central (23) reliant lesdites boîtes, les boîtes d'extrémité contenant respectivement les jeux de bornes d'entrée et le capot central étant disposé au-dessus des brides et comportant une face supérieure ondulée pourvue d'ouïes d'aération (24).

6. Répartiteur selon la revendication 5, caractérisé en ce que les boîtes d'extrémité (21, 22) comportent des ouvertures de ventilation (25)

7. Répartiteur selon la revendication 5, caractérisé en ce que les boîtes d'extrémité (21, 22) comportent des ouvertures (28, 29) pour l'accès aux bornes d'entrée (11a,b,c,d; 12a,b,c,d).

8. Répartiteur selon la revendication 1, caractérisé en ce que le boîtier de protection (20) est équipé d'une goulotte de câbles (26) agencée pour contenir des fils fins d'auxiliaires.

9. Répartiteur selon la revendication 8, caractérisé en ce que la goulotte de câbles (26) comporte des ouvertures (31, 32, 33) et des tunnels de guidage (61, 62, 63) pour le passage de fils fins d'auxiliaires.

## Patentansprüche

1. Vielfachverbindungssystem zur Einspeisung einer Schaltgerätereihe, insbesondere von Leistungsschaltern, welches Vielfachverbindungssystem eine Anordnung aus längs angeordneten, leitenden Einspeiseschienen (10a, b, c, d), die jeweils mindestens eine Eingangsklemme sowie eine Gruppe von Ausgangsklemmen (13, 14, 15) aufweist, welche dazu dienen, mit jeweils einer zugeordneten Eingangsklemme der Schaltgeräte der genannten Reihe verbunden zu werden, sowie ein Schutzgehäuse (20) umfaßt, dadurch gekennzeichnet, daß die genannten Ausgangsklemmen (13a, b, c, d; 14a, b, c, d; 15a, b, c, d) mit den genannten Einspeiseschienen (10a, 10b, 10c, 10d) über Stege (16a, b, c, d; 17a, b, c, d; 18a, b, c, d) verbunden sind, die in parallel zueinander liegenden, mit der Längsachse der genannten Schienen einen spitzen Winkel bildenden Ebenen angeordnet sind, daß diese Einspeiseschienen an jedem ihrer Enden eine Eingangsklemmengruppe (11a, b, c, d; 12a, b, c, d) aufweisen und daß die Ausgangsklemmen der Steganordnung in einer Flucht parallel zu den Einspeiseschienen angeordnet sind.

2. Vielfachverbindungssystem nach Anspruch 1, dadurch gekennzeichnet, daß die an einem Ende der Einspeiseschienen angeordnete Eingangsklemmengruppe (11a, b, c, d) komplementär zu der auf der anderen Seite der Einspeiseschienen angeordneten Eingangsklemmengruppe (12a, b, c, d) ist, derart daß eine Reihenverbindung zwischen zwei identischen Vielfachverbindungssystemen (10) in ihrer jeweiligen Verlängerung gebildet werden kann.

3. Vielfachverbindungssystem nach Anspruch 2, dadurch gekennzeichnet, daß die auf einer Seite der Einspeiseschienen angeordneten Eingangsklemmen (11a, b, c, d) in bezug auf die, auf der anderen Seite der Einspeiseschienen angeordneten Eingangsklemmen (12a, b, c, d) seitlich gegeneinander versetzt in einem Abstand angeordnet sind, welcher annähernd der Dicke einer Schiene (10a, 10b, 10c, 10d) entspricht.

4. Vielfachverbindungssystem nach Anspruch 1, dadurch gekennzeichnet, daß die genannten Stege (16a, b, c, d; 17a, b, c, d; 18a, b, c, d), die Ausgangsklemmen (13a, b, c, d; 14a, b, c, d; 15a, b, c, d) und die Einspeiseschienen (10a, 10b, 10c, 10d) aus der gleichen Platte eines elektrisch gut leitenden Werkstoffs ausgestanzt und so gebogen sind, daß die Längsachse dieser Stege quer zur Längsachse der Einspeiseschienen verläuft und ihre Querachse einen spitzen Winkel mit der Längsachse der Einspeiseschienen bildet.

5. Vielfachverbindungssystem nach Anspruch 1, dadurch gekennzeichnet, daß das genannte Schutzgehäuse zwei Endkästen (21, 22) sowie eine, die genannten Endkästen miteinander verbindende Mittelabdeckung (23) umfaßt, wobei die Endkästen die jeweiligen Eingangsklemmengruppen enthalten und die Mittelabdeckung über den Stegen angeordnet ist sowie eine gewellte Oberseite mit Lüftungsöffnungen (24) aufweist.

6. Vielfachverbindungssystem nach Anspruch 5, dadurch gekennzeichnet, daß die Endkästen (21, 22) Lüftungsöffnungen (25) aufweisen.

7. Vielfachverbindungssystem nach Anspruch 5, dadurch gekennzeichnet, daß die Endkästen (21, 22) Öffnungen (28, 29) für den Zugang zu den Eingangsklemmen (11a, b, c, d; 12a, b, c, d) aufweisen.

8. Vielfachverbindungssystem nach Anspruch 1, dadurch gekennzeichnet, daß das Schutzgehäuse (20) mit einem Kabelkanal (26) ausgerüstet ist, der zur Aufnahme der Hilfsverdrahtungen dient.

9. Vielfachverbindungssystem nach Anspruch 8, dadurch gekennzeichnet, daß der Kabelkanal (26) Öffnungen (31, 32, 33) sowie Führungstunnel zur Durchführung der Hilfsverdrahtungen (61, 62, 63) aufweist.

## Claims

1. A distributor for electrical power supply of a series of switchgear units, notably circuit breakers, this distributor comprising a set of longitudinal conducting supply busbars (10a, 10b, 10c, 10d) each provided with at least one input terminal and with a series of output terminals (13, 14, 15), the latter being respectively arranged to be connected to a suitable input terminal of the switchgear units of said series, and a protective case (20), characterized in that said output terminals (13a,b,c,d; 14a,b,c,d; 15a,b,c,d) are connected to said supply busbars (10a, 10b, 10c, 10d) by flanges (16a,b,c,d; 17a,b,c,d; 18a,b,c,d) arranged in parallel planes forming an acute angle with the longitudinal axis of said busbars, and that these supply busbars comprise a set of input terminals (11a,b,c,d; 12a,b,c,d) at each of their ends and that the output terminals of the set of flanges are aligned parallel to the supply busbars.

2. The distributor according to claim 1, characterized in that the set of input terminals (11a,b,c,d) arranged at one end of the supply busbars is complementary to the set of input terminals (12a,b,c,d) arranged at the other end of the supply busbars, in such a way that two identical distributors (10) can be coupled in series one in the extension of the other.

3. The distributor according to claim 2, characterized in that the input terminals (11a,b,c,d) arranged at one end of the supply busbars are laterally offset with respect to the input terminals (12a,b,c,d) arranged at the other end of these busbars by a distance appreciably equal to the thickness of a busbar (10a, 10b, 10c, 10d).

4. The distributor according to claim 1, characterized in that said flanges (16a,b,c,d; 17a,b,c,d; 18a,b,c,d), the output terminals (13a,b,c,d; 14a,b,c,d; 15a,b,c,d) and the supply busbars (10a, 10b, 10c, 10d) are cut out from a single flat plate made of a good electrical conducting material and folded in such a way that the flanges have a longitudinal axis perpendicular to the longitudinal axis of the supply busbars and a transverse axis which forms an acute angle with the longitudinal axis of the supply busbars.

5. The distributor according to claim 1, characterized in that said protective case comprises two end boxes (21, 22) and a central cover (23) joining said boxes, the end boxes respectively containing the sets of input terminals and the central cover being arranged above the flanges and comprising an undulated upper face provided with airing vents (24).

6. The distributor according to claim 5, characterized in that the end boxes (21, 22) comprise ventilation openings (25).

7. The distributor according to claim 5, characterized in that the end boxes (21, 22) comprise openings (28, 29) for access to the input terminals (11a,b,c,d; 12a,b,c,d).

8. The distributor according to claim 1, characterized in that the protective case (20) is equipped with a cable trunking (26) arranged to contained fine wires of auxiliaries.

9. The distributor according to claim 8, characterized in that the cable trunking (26) comprises openings (31, 32, 33) and guide tunnels (61, 62, 63) for passage of fine wires of auxiliaries.
